Europäisches Patentamt

European Patent Office

Office européen des brevets

(11) Veröffentlichungsnummer : **0 236 892 B1**

(12) **EUROPÄISCHE PATENTSCHRIFT**

(45) Veröffentlichungstag der Patentschrift :
06.02.91 Patentblatt 91/06

(51) Int. Cl.$^5$ : **C08B 17/06**

(21) Anmeldenummer : 87102907.0

(22) Anmeldetag : 02.03.87

(54) **Verfahren zur Herstellung von Polysaccharidethern unter Verwendung eines Reaktors mit mehrstufigem Rührorgan und Strombrechern.**

(30) Priorität : 10.03.86 US 838231

(43) Veröffentlichungstag der Anmeldung :
16.09.87 Patentblatt 87/38

(45) Bekanntmachung des Hinweises auf die
Patenterteilung :
06.02.91 Patentblatt 91/06

(84) Benannte Vertragsstaaten :
BE DE FR GB IT

(56) Entgegenhaltungen :
GB-A- 2 011 794
NL-A- 7 200 545
US-A- 4 063 018

(72) Erfinder : **Rähse, Wilfried, Dr.**
**Kolhagenstrasse 44**
**D-4000 Düsseldorf 13 (DE)**
Erfinder : **Wüst, Willi, Dr.**
**Fasanenring 32**
**D-4030 Ratingen (DE)**
Erfinder : **Kühne, Norbert**
**Dürerstrasse 63**
**D-5657 Haan 1 (DE)**

(74) Vertreter : **von Kreisler, Alek, Dipl.-Chem. et al**
**Patentanwälte Von Kreisler-Selting-Werner,**
**Deichmannhaus am Hauptbahnhof**
**D-5000 Köln 1 (DE)**

(73) Patentinhaber : **Henkel**
**Kommanditgesellschaft auf Aktien**
**Postfach 1100 Henkelstrasse 67**
**D-4000 Düsseldorf-Holthausen (DE)**

# Beschreibung

Die Erfindung betrifft ein Verfahren zur Herstellung von Polysaccharidethern, insbesondere von Celluloseethern aus in organischen Lösungsmitteln suspendierter Cellulose und Alkylhalogeniden und-/oder niederen Epoxiden durch Alkalisierung und Veretherung unter Rühren.

Es ist bekannt, Polysaccharidether, insbesondere Celluloseether in mehrfach wiederholten Umsetzungsstufen, jeweils bestehend aus Alkalisieren einer Suspension feinteiliger Cellulose und nachfolgender Veretherung, wie es beispielsweise in der DE-OS 33 03 153 beschrieben ist, herzustellen. Die Reaktionen erfolgen dabei vorzugsweise in gerührten Reaktoren, beispielsweise in Mischern, in Rührkesseln, Kaskaden aber auch in Kolonnen bzw. in Schneckenapparaten.

Von den in Frage kommenden Aggregaten sind mannigfaltige Ausführungsformen bekannt. Je nachdem, ob z.B. Carboxymethyl-, Methyl-, Hydroxyethyl-, Hydroxypropylcellulose-ether sowie deren Mischether hergestellt werden sollen, oder auch in Abhängigkeit von der Rohstoffbasis, die neben Cellulose aus Stärken und Guar sowie deren Gemischen bestehen kann, wobei die Einsatzstoffe in unterschiedlichen Ausbildungsformen von pulverförmig bis zu ca. 2 mm langen Fasern vorliegen können, wird eine spezielle Ausführungsform eines Reaktors ausgewählt, dessen Ausbildung auf die in ihm zur Reaktion gelangenden Rohstoffe abgestimmt ist.

Neben der damit auf bestimmte Rohstoffe bzw. Produkte begrenzten Einsatzfähigkeit des jeweiligen Mischaggregates ist es weiterhin von Nachteil, daß die Reaktionsdurchführung in allen bekannten Fällen von einem relativ hohen Energieverbrauch begleitet wird, d.h. unter hoher Energieeinleitung erfolgt. So soll die Reaktionsdurchführung, z.B. gemäß der US-PS 4 063 018, unter Bedingungen einer Naßmahlung stattfinden, wird in der DE-OS 1 911 993 vorgeschlagen, die Ausgangsstoffe kräftig, vorzugsweise unter Kombination einer taumelnden und einer schlagenden Bewegung zu mischen oder erfolgt die Energieeinleitung, z.B. wie in der DE-OS 2 400 879 beschrieben, durch Umpumpen über Homogenisatoren.

Demgegenüber ist es Aufgabe der Erfindung, ein Verfahren zur Herstellung von Polysaccharidethern, insbesondere Celluloseethern, zu schaffen, das universell bei allen in Frage kommenden Rohstoffen anwendbar ist und einen minimalen Energieverbrauch bei guter Durchmischung und Homogenisierung bzw. Suspendierung der Reaktanden aufweist.

Bei einem Verfahren der eingangs bezeichneten Art wird diese Aufgabe gemäß der Erfindung durch die Verwendung eines Reaktors mit einem mehrere im Abstand voneinander auf einer Rührwelle angeordnete Rührelemente aufweisenden Rührorgan und entlang der Behälterinnenwand, in parallelem Anstand dazu angeordneten Strombrechern gelöst, wobei der vertikale Abstand zweier Rührelemente voneinander 0,15-0,20 D (Reaktordurchmesser) beträgt, der radiale Abstand der der Reaktorwand näheren Strombrecherkante von der Reaktorwand 0,035-0,05 D beträgt, die Rührerwelle sich bis zum Boden des Reaktors und bis in die Nähe der Ablaßöffnung erstreckt und mit einem bodennahen Rührelement ausgestattet ist.

Untersuchungen über die Herstellung von Polysaccharidethern, insbesondere Celluloseethern, haben überraschenderweise ergeben, daß sowohl bei der Alkalisierung als auch bei der Veretherung auf eine besondere Energieeinleitung bzw. auf die Einwirkung hoher Scherkräfte entgegen bisherigen Erkenntnissen verzichtet werden kann, wenn eine gute Durchmischung der Reaktanden, üblicherweise die suspendierte Cellulose bzw. Alkalicellulose, insbesondere unter der Vermeidung der Entstehung von Todzonen erfolgt. Eine totraumfreie Durchmischung wird in vorteilhafter Weise, d.h. ohne hohe Energieeinleitung, durch die Verwendung eines Reaktors gemäß dem kennzeichnenden Teil des Hauptanspruches erreicht. Der erfindungsgemäß verwendete Reaktor weist gegenüber den sonst üblichen Rührkesseln einen geringeren vertikalen Abstand der Rührelemente, einen größeren radialen Abstand der Stromstörer von der Behälterwand sowie eine längere Rührerwelle mit zusätzlichem Rührelement in Bodennähe auf.

Ist z. B. der Abstand zwischen der behälterinnenwandnahen Längskante der Stromstörer und der Behälterinnenwand kleiner als 0,035 D ausgelegt, so ist eine totraumfreie Durchmischung der Reaktanden bei der erfindungsgemäßen Verwendung des Reaktors nicht mehr gewährleistet. Dies wird durch Messungen der Trübungszahlen deutlich, z. B. gemessen an 2-Gew.%-igen wässrigen Lösungen von Carboxymethylcellulose mittleren Modifizierungsgrades in einem Meßgerät der Firma Lange, Berlin, in Küvetten mit 3,5 cm Schichtdicke. Bei einem radialen Abstand der Stromstörer von der Behälterinnenwand < 0,035 D steigt die Trübungszahl auf > 50 an, wogegen sich ein Abstand von > 0,035 D eine Trübungszahl von < 10 ergibt.

In Ausgestaltung sieht die Erfindung vor, daß das Verhältnis Rührorgandurchmesser d zu Reaktordurchmesser D 0,6-0,7 beträgt. Auch diese Ausbildung trägt zu einer guten Durchmischung und Homogenisierung bzw. Suspendierung der Reaktanden bei, da durch die Größe des Rührorganes zum einen ein großer Bereich des Reaktors durch die Rührorgane bestrichen wird, zum anderen aber noch genügend Platz für die Ausbildung der Stromstörer vorhanden ist. Weisen die Rührorgane einen größeren Durchmesser auf, so muß auf die Ausbildung von Stromstörern verzichtet werden, was zu einem sogenannten Karusselleffekt in der zu rührenden Suspension und damit zu einer schlechteren Durchmischung und Homogenisierung bzw. Suspendierung führt.

Vorteilhaft ist es, wenn die Mindestumfangsgeschwindigkeit des Rührorganes 4,5-7 m/s beträgt. Während die Messung der Trübungszahl bei Umfangsgeschwindigkeiten in diesem Bereich Werte von < 10 ergibt, steigt die Trübungszahl bei Mindestumfangsgeschwindigkeiten unterhalb 4,5 m/s auf Werte von über 30 an. Somit trägt auch diese Ausgestaltung zu einer guten Durchmischung und Homogenisierung bzw. Suspendierung der Cellulose bei. Bei hohen Umfangsgeschwindigkeiten von > 7 m/s verschlechtern sich die Verhältnisse wieder und läßt sich keine homogene Verteilung im Reaktor erzielen.

Schließlich sieht die Erfindung in weiterer Ausgestaltung vor, daß das Rühren bei einer Überdeckung des obersten Rührelementes in einer Höhe von 0,1-0,33 D erfolgt. Auch diese Anordnung unterstützt das gute Durchmischungsverhalten bei Homogenisierungs- bzw. Suspendierungsvorgängen in dem erfindungsgemäß verwendeten Reaktor.

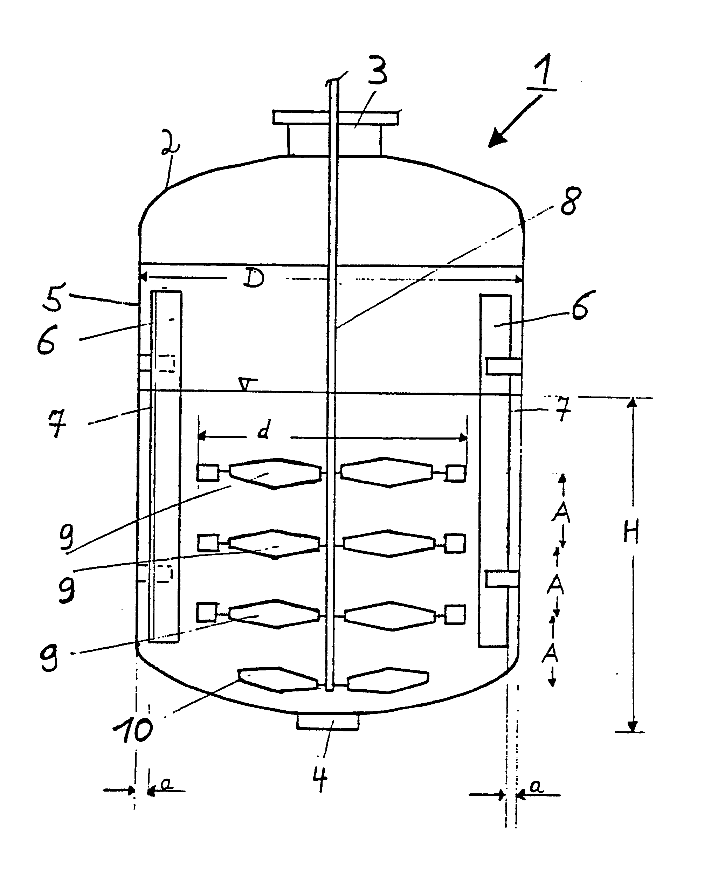

Ein Ausführungsbeispiel der Erfindung ist nachstehend anhand der Zeichnung beispielsweise näher erläutert.

Der dargestellte Reaktor 1 besteht aus tonnen- oder kesselartigen Hohlgefäß 2, das eine Pinlaßöffnung 3 und eine Auslaßöffnung 4 aufweist. In seinem zylindrischen Bereich 5 ist die Größe des Reaktors durch den Durchmesser D bestimmt. In diesem zylindrischen Bereich 5 des Reaktors 1 sind an der Reaktorinnenwand parallel zu dieser senkrecht ausgerichtete Stromstörer 6 derart angeordnet, daß sich deren behälterinnenwandnahe Längskante 7 in einem Abstand a zur Behälterinnenwand befindet. In dem zylindrischen Teil 5 sind im Reaktorinnern zwei Stromstörer gegenüberliegend angeordnet. Es können aber auch drei, vier und mehr Stromstörer umfangsmäßig auf der Mantelinnenfläche des zylindrischen Bereiches 5 im Reaktor 1 befestigt sein.

Konzentrisch zu seiner Längsachse weist der Reaktor 1 eine angetriebene Welle 8 auf, die im unteren Reaktorbereich mit einem Rührorgan bestehend aus einzelnen Rührelementen 9, 10 versehen ist. Von den vier Rührelementen 9, 10 weisen die drei oberen Rührelemente 9 den Rührorgandurchmesser d auf und sind als Mehrstufenimpulsgegenstromrührer ausgebildet, während ein bodennahes Rührelement 10 einen kleineren Durchmesser als d aufweisend als Trapezpropeller ausgebildet ist.

Die Rührelemente 9, 10 sind in einem Abstand A vertikal übereinander angeordnet und werden während des Misch- bzw. Rührvorganges von der zu homogenisierenden bzw. suspendierenden Flüssigkeit oder Masse, die die Füllhöhe H im Reaktor ausfüllt, überdeckt.

Die Welle 8 wird während des Mischvorganges mittels eines Antriebsaggregates, z. B. ein Elektromotor, in Rotation versetzt, womit gleichzeitig das an der Welle 8 befestigte Rührorgan bewegt und dessen Umfangsgeschwindigkeit bestimmt wird.

Die Ausführung des Rührorgans stellt nur eine mögliche Ausgestaltung dar. Es ist ebenso möglich, die Rührelemente 9, 10 als Interferenzmehrstufenimpulsgegenstromrührer und insbesondere auch das bodennahe Rührelement 10 mit gleichem Durchmesser d wie die anderen Rührelemente 9 auszubilden.

Natürlich ist es auch möglich, mehr als vier Rührelemente 9, 10 in einem Rührorgan zusammenzufassen, wenn es z. B. die zu durchmischende Füllhöhe H zweckdienlich erscheinen läßt.

## Ansprüche

1. Verfahren zur Herstellung von Polysaccharidethern, insbesondere von Celluloseethern aus in organischen Lösungsmitteln suspendierter Cellulose und Alkylhalogeniden und/oder niederen Epoxiden durch Alkalisierung und Veretherung unter Rühren, gekennzeichnet durch die Verwendung eines Reaktors (1) mit einem mehrere im Abstand voneinander auf einer Rührwelle angeordnete Rührelemente aufweisenden Rührorgan und entlang der Behälterinnenwand, in parallelem Anstand dazu angeordneten Strombrechern (6), wobei der vertikale Abstand (A) zweier Rührelemente (9, 10) voneinander 0,15 bis 0,20 D (Reaktordurchmesser) beträgt ; der radiale Abstand (a) der der Reaktorwand näheren Strombrecherkante (7) von der Reaktorinnenwand 0,035 bis 0,05 D beträgt ; die Rührerwelle (8) sich bis zum Boden des Reaktors (1) und bis in die Nähe der Ablaßöffnung (4) erstreckt und mit einem bodennahen Rührelement (10) ausgestattet ist.

2. Verfahren nach Anspruch 1, dadurch gekennzeichnet, daß das Verhältnis Rührorgandurchmesser d zu Reaktordurchmesser D 0,6 bis 0,7 beträgt.

3. Verfahren nach Anspruch 1, dadurch gekennzeichnet, daß die Mindestumfangsgeschwindigkeit des Rührorgans 4,5-7 m/s beträgt.

4. Verfahren nach Anspruch 1, dadurch gekennzeichnet, daß das Rühren bei einer Überdeckung des obersten Rührelementes (9) in einer Höhe von 0,1-0,33 D erfolgt.

## Claims

1. A process for the production of polysaccharide ethers, more particularly cellulose ethers, from cellulose suspended in organic solvents and alkyl halides and/or lower epoxides by alkalization and etherification with stirring, characterized by the use of a reactor (1) with a stirrer comprising one or more stirrer elements arranged at intervals from one another on a stirrer shaft and baffles (6) arranged along the inner wall of the reactor parallel to and at a distance therefrom, the vertical distance (A) between two stirrer elements (9,10) being 0.15 to 0.20 D (reactor diameter) ; the radial distance (a) of the baffle edge (7) nearer the reactor wall from the inner reactor wall being 0.035 to 0.05 D ; the stirrer shaft (8) extending to the bottom of the reactor (1) and into the vicinity of the outlet opening (4) and being equipped with a stirrer element (10) close to the bottom of the reactor.

2. A process as claimed in claim 1, characterized in that the ratio of the stirrer diameter d to the reactor diameter D is 0.6 to 0.7

3. A process as claimed in claim 1, characterized in that the minimum peripheral speed of the stirrer is 4.5 to 7 m/s.

4. A process as claimed in claim 1, characterized in that, where the uppermost stirrer element is covered, stirring takes place at a height of 0.1 to 0.33 D.

## Revendications

1. Procédé de préparation d'éthers de polysaccharides, notamment d'éthers de cellulose à partir de cellulose en suspension dans des solvants organiques et d'halogénures d'alkyle et/ou d'époxydes inférieurs par alcalisation et éthérification sous agitation, caractérisé en ce qu'on utilise un réacteur (1) avec un organe d'agitation présentant plusieurs éléments d'agitation disposés sur un arbre mélangeur à intervalle les uns des autres et des chicanes (6) disposées avec un écartement parallèlement le long de la paroi interne de la cuve, l'écartement vertical (A) de deux éléments d'agitation (9, 10) est de 0,15 à 0,20 D (diamètre du réacteur), l'écartement radial (a) du bord de la chicane (7) le plus près de la paroi interne du réacteur est compris entre 0,035 et 0,05 D, l'arbre (8) s'étend jusqu'au fond du réacteur (1) et jusqu'à proximité de l'orifice de sortie (4) et est équipé d'un élément d'agitation de fond (10).

2. Procédé selon la revendication 1, caractérisé en ce que le rapport du diamètre d de l'organe d'agitation au diamètre du réacteur D est de 0,6 à 0,7.

3. Procédé selon la revendication 1, caractérisé en ce que la vitesse périphérique minimale de l'organe d'agitation est de 4,5 à 7 m/s.

4. Procédé selon la revendication 1, caractérisé en ce que l'agitation a lieu avec un recouvrement de l'élément d'agitation supérieur d'une hauteur de 0,1 à 0,33 D.